# EUROPEAN PATENT APPLICATION

(11) **EP 2 857 817 A1**
(43) Date of publication of application: **08.04.2015**
(21) Application number: 13797508.2
(22) Date of filing: 10.05.2013
(51) Int. Cl.: G01L 19/14

(54) **PRESSURE DETECTION DEVICE**

(30) Priority: 31.05.2012 JP 2012124939
(71) Applicant: Nippon Seiki Co., Ltd., Nagaoka-shi, Niigata 940-8580 (JP)
(72) Inventor: KAMIMURA,Yoshihiro, Nagaoka Niigata (JP); SATO,Shuji, Nagaoka Niigata (JP)
(74) Representative: Carpmaels & Ransford LLP
(86) International application number: PCT/JP2013/063098
(87) International publication number: WO 2013/179871

(57) **Abstract**

The present invention provides a pressure detection device which enables a simplified structure and reduced manufacturing costs. A pressure detection device is characterized by being provided with: a fluid inflow member (10); a semiconductor-type pressure sensor (20) (sensor); a first unit member (30) which has a first lead terminal (33) connected to the sensor (20); a second unit member (50) which has a lid member (40) that covers the sensor (20) and forms an enclosed space, and a second lead terminal (51) that is connected to the first lead terminal (33); and a resinous cover member (60) which combines the respective members (10, 20, 30, 40, 50) and covers the members (30, 40, 50) by resin molding with part of the second lead terminal (51) exposed to the outside therethrough, and characterized in that the sensor (20) and the first lead terminal (33) are connected by wire bonding, the first lead terminal (33) and the second lead terminal (51) are joined by welding, and the joined portion is covered when the resinous cover member (60) is molded.

## Description

### TECHNICAL FIELD

The present invention relates to a pressure detection device provided with a semiconductor type pressure sensor, and in particular, to a pressure detection device which is capable of being employed as a pressure detection device for vehicle or the like, for example, which is used under a severe environment.

### BACKGROUND ART

As a conventional pressure detection device, for example, there is the one disclosed in Patent Literature 1. The pressure detection device according to Patent Literature 1 has a semiconductor type pressure sensor which is arranged via a base plate on a pressure introducing section which introduces a pressure of a fluid; has a circuit board which is provided with a housing hole portion which arranges the semiconductor type pressure sensor, and is electrically connected to the semiconductor type pressure sensor by way of a wire exerted by wire bonding; has an arrangement section which is integrally or separately provided with or from the pressure introducing section, and arranges the circuit board; and has an overlapping section at which a circumferential edge part of the housing hole portion of the circuit board and the semiconductor type pressure sensor on the base plate abut against each other, whereby even in a case where the device is used under a severe environment, a pressure detection device with a high reliability of electrical connection relative to vibration resistance can be obtained..

### CITATION LIST

### PATENT LITERATURE

Patent Literature 1: Japanese Unexamined Patent Application Publication No. 2002-257663

### SUMMARY OF THE INVENTION

### PROBLEMS TO BE SOLVED BY THE INVENTION

However, since the pressure detection device described in Patent Literature 1 employs a structure to connect a semiconductor type pressure sensor and a circuit board by way of a wire exerted by wire bonding, there is a need to provide the circuit board, a structure of which is complicated, and there is a need to provide an Au pad at a connection site of the wire in the circuit board, and further, there has been a problem associated with higher costs.

Accordingly, the present invention has been made in order to solve the problem mentioned above, and it is an object of the present invention to provide a pressure detection device which is capable of simplifying a structure and lowly restraining manufacturing costs.

The present invention for solving the problems described above, in Claim1, a pressure detection device comprising:
a fluid inflow member having a flow passageway into which a fluid can be flown;
a semiconductor type pressure sensor which is provided on a top face of the fluid inflow member, and detects the pressure of the fluid having flown into the flow passageway;
a first unit member having:
   a first resin section which is provided on the top face of the fluid inflow member, and surrounds the semiconductor type pressure sensor; and
   a first lead terminal which is retained by the first resin section, one end part of which is electrically connected to the semiconductor type pressure sensor;
a lid member which is coupled to the first resin section so as to cover the semiconductor type pressure sensor from an upper side, and forms a closed space in which the semiconductor type pressure sensor is internally positioned;
a second unit member having:
   a second resin section which covers the lid member from an upper side; and
   a second lead terminal which is retained by the second resin section, and is electrically connected to an other end part of the first lead terminal; and
a resin cover member which couples the fluid inflow member and the first unit member and the lid member and the second unit member, and covers the first unit member, the lid member, and the second unit member by resin molding, while a part of the second lead terminal of the second unit member is exposed to an outside,
wherein the semiconductor type pressure sensor and the first lead terminal that is retained by the first resin section are connected to each other by a wire exerted by wire bonding,
the first lead terminal and the second lead terminal are bonded with each other by welding, and
a bonding portion thereof is covered at a time of molding the resin cover member.

By employing such a construction, since there is no need to provide a conventionally indispensable circuit board, it is possible to simplify a structure and lowly restrain manufacturing costs, and a first lead terminal and a second lead terminal are bonded with each other by welding, thereby making it possible to sufficiently retain an electrical connection and a mechanical fixing strength, and moreover, a bonding portion thereof is covered at the time of molding of a resin cover member, thereby making it possible to ensure air tightness.

In Claim 2, the pressure detection device according to claim 1, wherein
the first lead terminal is made of a lead frame integrally including a plurality of lead terminals for power supply, output, and grounding, at a time of insert molding exerted by the first resin section, and
subsequent to insert molding of the first resin section, a coupling section provided at the lead frame is cut and obtained as the first lead terminal individually separated, and the wire is connected to a wire connecting portion which is provided at an end part of the first lead terminal obtained at a time of the cutting.

By employing such a construction, subsequent to insert molding of a first resin section, a coupling portion provided on a lead frame is cut, a first lead terminal individually separated is obtained, and a wire is connected to a wire connecting portion which is provided at an end part of the first lead terminal that is obtained at the time of the cutting, whereby a conventionally indispensable circuit board can be eliminated, thus making it possible to simplify a structure and lowly restrain manufacturing costs.

In Claim 3, the pressure detection device according to claim 2, comprising, in the first resin section, an opening portion for disposing the semiconductor type pressure sensor,
wherein the lead frame has, in the opening portion, the coupling section to be coupled by a plurality of lead terminals, and
subsequent to insert molding of the first resin section, the coupling section is formed to be cut.

By employing such a construction, since a coupling portion of the lead frame that is positioned at an opening portion can be easily cut, a plurality of lead terminal sections which are capable of connecting to a semiconductor type pressure sensor can be obtained without complicating manufacturing processes.

In Claim 4, the pressure detection device according to any one of claims 1 to 3, wherein plating processing is applied to the first lead terminal.

By employing such a construction, a reliability of wire connection by wire bonding can be improved.

### EFFECT OF THE INVENTION

According to the present invention, a pressure detection device comprising: a fluid inflow member having a flow passageway into which a fluid can be flown; a semiconductor type pressure sensor which is provided on a top face of the fluid inflow member, and detects the pressure of the fluid having flown into the flow passageway; a first unit member having: a first resin section which is provided on the top face of the fluid inflow member, and surrounds the semiconductor type pressure sensor; and a first lead terminal which is retained by the first resin section, one end part of which is electrically connected to the semiconductor type pressure sensor; a lid member which is coupled to the first resin section so as to cover the semiconductor type pressure sensor from an upper side, and forms a closed space in which the semiconductor type pressure sensor is internally positioned; a second unit member having: a second resin section which covers the lid member from an upper side; and a second lead terminal which is retained by the second resin section, and is electrically connected to an other end part of the first lead terminal; and a resin cover member which couples the fluid inflow member and the first unit member and the lid member and the second unit member, and covers the first unit member, the lid member, and the second unit member by resin molding, while a part of the second lead terminal of the second unit member is exposed to an outside, wherein the semiconductor type pressure sensor and the first lead terminal that is retained by the first resin section are connected to each other by a wire exerted by wire bonding, the first lead terminal and the second lead terminal are bonded with each other by welding, and a bonding portion thereof is covered at a time of molding the resin cover member. Therefore, since a conventionally indispensable circuit board can be eliminated, it is possible to simplify a structure and lowly restrain manufacturing costs, and a first lead terminal and a second lead terminal are bonded with each other by welding, thereby making it possible to sufficiently retain an electrical connection and a mechanical fixing rigidity, and moreover, a bonding portion thereof is covered at the time of molding of a resin cover member, whereby air tightness can be ensured, and an incipient object can be thereby achieved.

### BRIEF DESCRIPTION OF THE DRAWINGS

[Fig. 1] Fig. 1 is a sectional view showing a pressure detection device according to an embodiment of the present invention..
[Fig. 2] Fig. 2 is an exploded schematic sectional view showing a state before molding a resin cover member in the pressure detection device of Fig. 1.
[Fig. 3] Fig. 3 is an exploded sectional view showing a state in which a fluid inflow member, a pressure sensor, and a first unit member in Fig. 2 are assembled with each other.
[Fig. 4] Fig. 4 is an exploded sectional view of essential portions showing a state in which a lid member in Fig. 3 is assembled.
[Fig. 5] Fig. 5 is a sectional view of essential portions showing a state before molding a resin cover member in the pressure detection device.
[Fig. 6] Fig. 6 is a plan view and a sectional view showing a fluid inflow member and a pressure sensor of the pressure detection device.
[Fig. 7] Fig. 7 shows a first unit member of the pressure detection device, and is a plan view of a state prior to and subsequent to cutting a coupling portion of the lead frame and a sectional view in a state subsequent to the cutting.
[Fig. 8] Fig. 8 is a plan view and a sectional view showing a lid member of the pressure detection device.

### BEST MODE FOR CARRYING OUT THE INVENTION

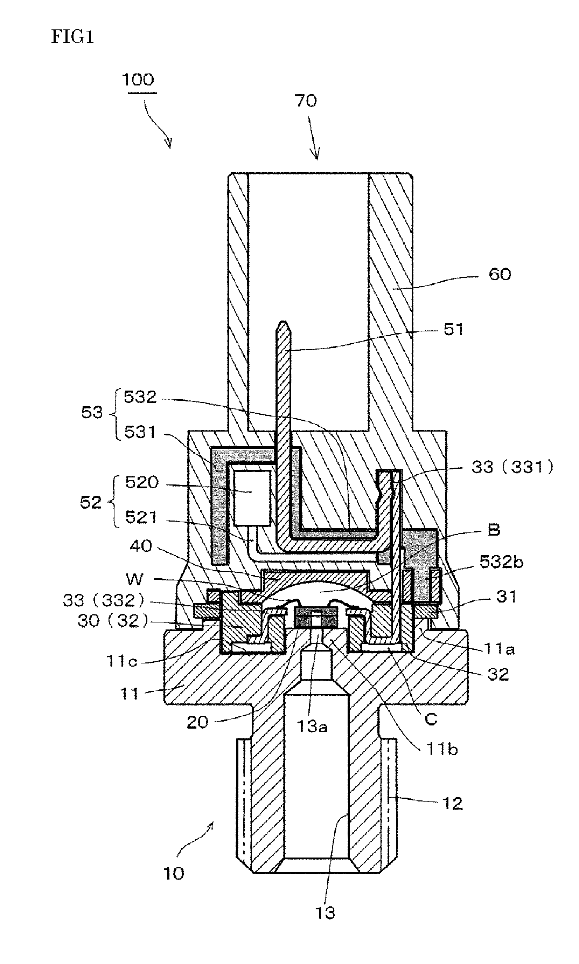

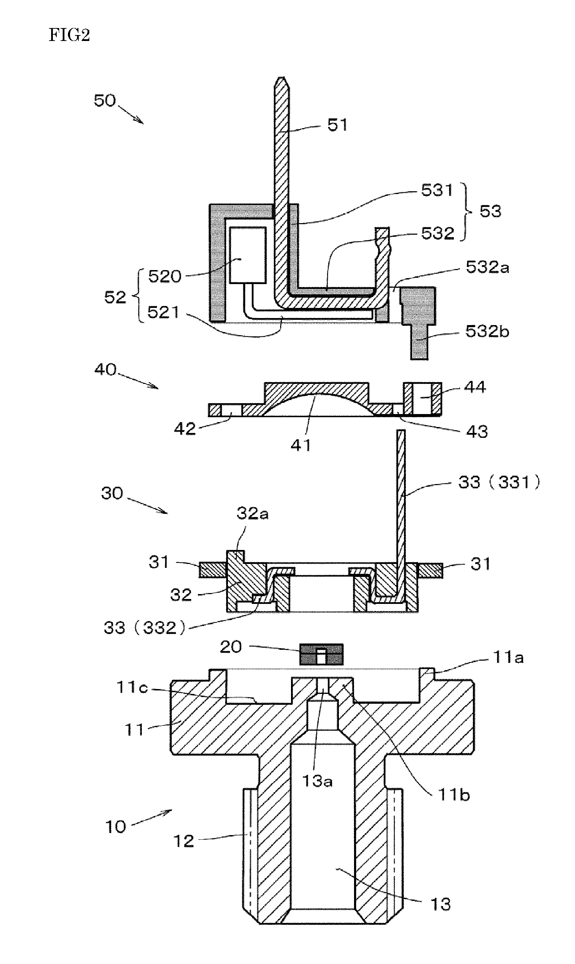

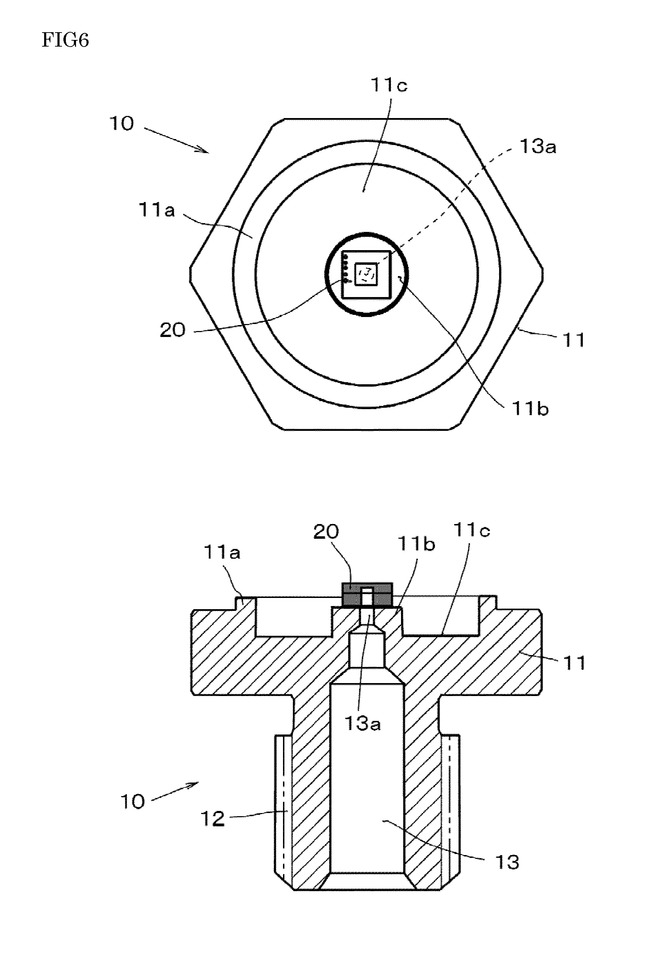

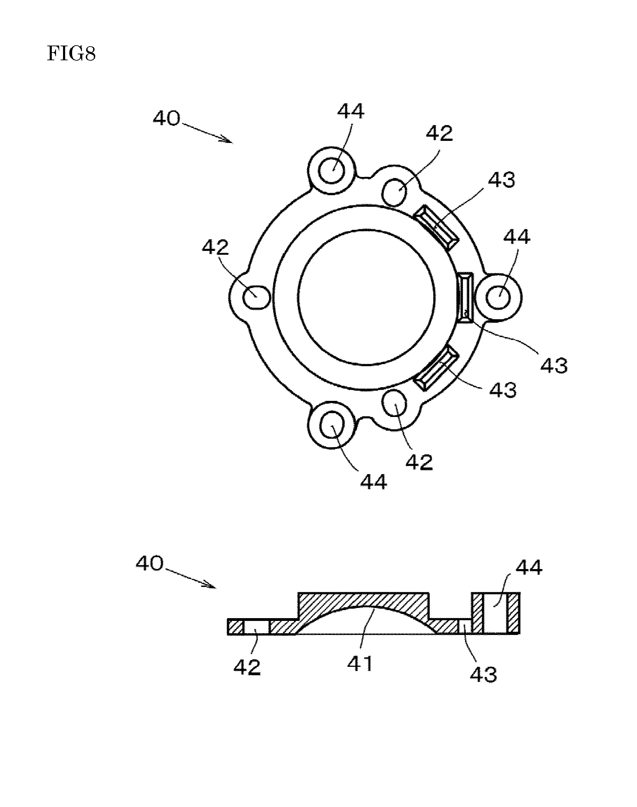

Hereinafter, a first embodiment in which the present invention is applied will be described with reference to the accompanying drawings (Fig. 1 to Fig. 8).

A pressure detection device 100 according to the embodiment of the present invention, as shown in Fig. 1 to Fig. 8, is provided with: a fluid inflow member 10; a semiconductor type pressure sensor (hereinafter, simply referred to as a pressure sensor) 20; a base plate unit (a first unit member) 30; a lid member 40; a terminal unit (a second unit member) 50; and a resin cover member 60. It is to be noted that the base plate unit 30 is one example of the first unit member, and the terminal unit 50 is one example of the second unit member.

The fluid inflow member 10 is made of a metal material such as stainless steel (SUS), and is a member which is integrally formed of a hexagonal barrel section 11; and a screw section 12 which is a substantially columnar portion positioned at a lower side of the barrel section, and is made of a helical groove at an outer circumference thereof.

Also, in the fluid inflow member 10, a flow passageway 13 which is a hole portion to penetrate the barrel section 11 and the screw portion 12 in a vertical direction is formed. The flow passageway 13 is a passageway into which a fluid (for example, oil) can flow from a lower side thereof. The flow passageway 13 is formed in a tapered shape as it goes upward.

The barrel section 11 has: a protrusion portion 11a which protrudes from a top face thereof, and is formed in a ring shape in a planar view; and a base 11b which is positioned at a center of the protrusion portion 11a in a planar view, and is approximately as high as the protrusion portion 11a. In this manner, between the protrusion portion 11a and the base 11b, a recessed portion 11c is formed.

On the base 11b, a pressure sensor 20 is placed, and is fixed by a predetermined method. At a center part of the base 11b, an opening portion 13a which is an upper end part of the flow passageway 13 is positioned.

The pressure sensor 20 arranges a semiconductor chip having a diaphragm thinly forming a semiconductor board such as a silicon on a glass base, for example. At sites corresponding to the diaphragm, four resistors are formed as pressure sensing elements, each of which has a piezoelectric resistance effect, by dispersion processing of impurities such as boron, and as to the pressure sensor 20, a bridge circuit is composed of each of the resistors and a wiring pattern which employs an electrically conductive material such as aluminum.

The pressure sensor 20 is subjected to a pressure of a fluid which is introduced by the flow passageway 13 from a lower side thereof, and detects the pressure of the fluid by an output voltage of the bridge circuit due to a displacement of the diaphragm.

The base plate unit (the first unit member) 30 is provided with a ring member 31, a first resin section 32, and a first lead terminal 33. With the ring member 31 and the first resin section 32, a substantially disk-shaped base plate which is disposed on the fluid inflow member 10, and retains the first lead terminal 33, is constructed.

The ring member 31, the first resin section 32, and the first lead terminal 33 are integrally molded with each other by insert molding. Namely, the first unit member 30 that is a base plate unit is a unit which is composed of the respective sections thus integrally molded.

The ring member 31 is made of a metal material such as SUS, and inside thereof, a donut-shaped first resin section 32 is positioned. The ring member 31 is bonded with the fluid inflow member 10 by a lower face part thereof being bonded with the protrusion portion 11a mentioned previously (for example, by resistance welding). In this manner, the base plate unit (the first unit member) 30 is connected to the fluid inflow member 10.

The first resin section 32 is made of a PPS (Poly Phenylene Sulfide) resin, for example, and at a center part thereof, an opening portion 320 surrounding the pressure sensor 20 is formed. At the periphery of the opening portion 320 of the first resin section 32, one end part of the first lead terminal 33 is exposed, and such one end part is provided so as to be positioned in the vicinity of the pressure sensor 20. The first resin section 32 retains the first lead terminal 33.

Also, the first resin section 32 has a pin 32s which is erected upward, and which is for determining a position of a lid member 40 relative to the base plate unit 30.

In addition, the first resin section 32 is a section in which a recessed portion 32b is formed at a lower face side thereof, and if the base plate unit 30 is arranged on the fluid inflow member 10, a space C is formed between this recessed portion 32b and a recessed portion 11c which is formed in the fluid inflow member 10 10.

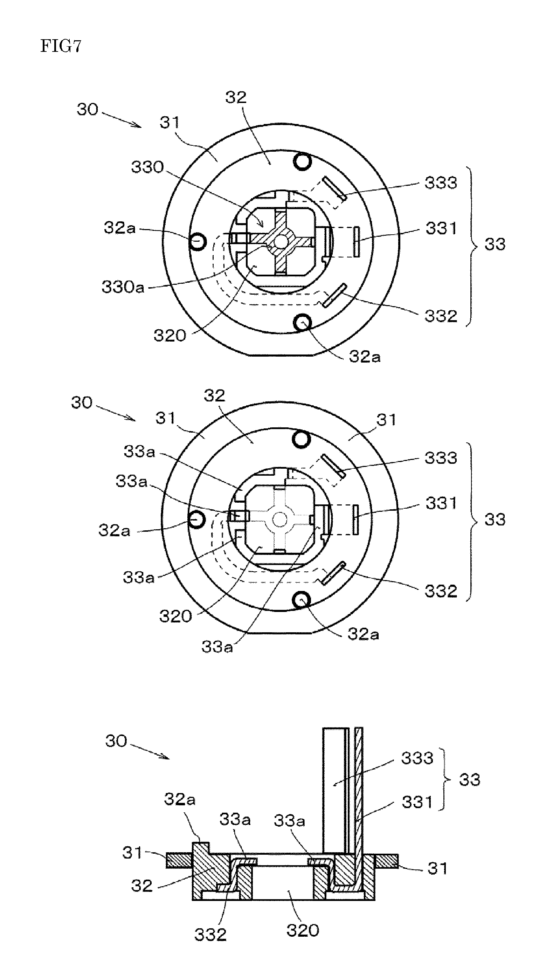

The first lead terminal 33 is made of a phosphor bronze material, for example, and is a sectional substantial L-shaped member. There are three first lead terminals 33, as shown in Fig. 7, and these three terminals are respectively assigned as a power line, a signal line, and a ground line.

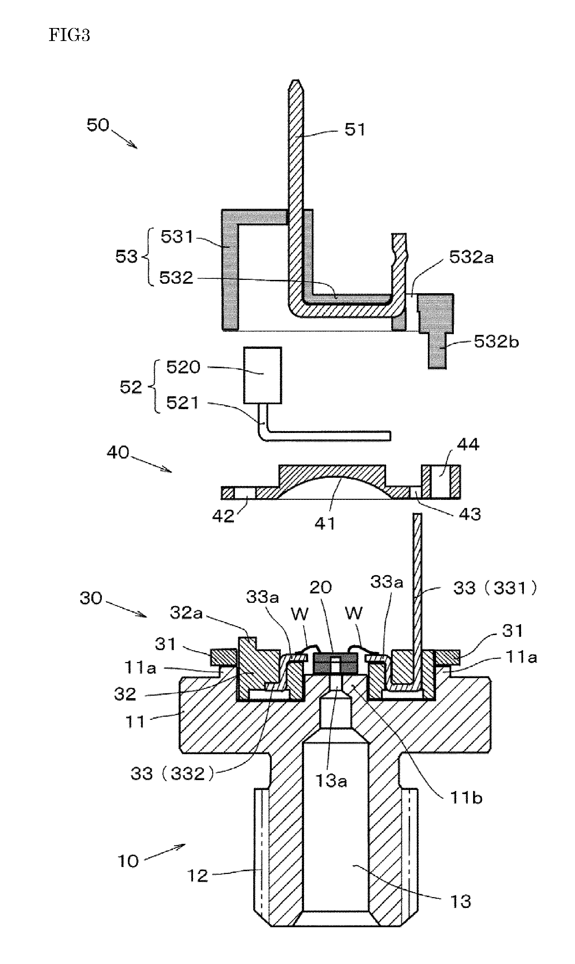

Hereinafter, a description will be given as required on the presupposition that, among the three first lead terminals 33, in Fig. 3, the one positioned at the center part is assigned by reference numeral 331, the one positioned at the left side is assigned by reference numeral 332, and the one positioned at the right side is assigned by reference numeral 333. However, although the three first lead terminals 331, 332, 333 are different from each other at their positions, since they have similar structures to each other, related matters common to these three terminals will be explained in all by assigning reference numeral 33.

Also, Ni plating is applied to a surface of the first lead terminal 33, and the coated surface is provided so as to enhance a reliability of connection of the wire W by wire bonding.

Although one end part of the first lead terminal 33 is positioned in the vicinity of the pressure sensor 20 as mentioned previously, the other end part extends to an upper side, and is positioned at a position which can be connected to a second lead terminal 51, which will be described later, of a terminal unit 50 (second unit member). The first lead terminal 33 is formed to be folded so that each of both end parts is thus positioned.

One end part of the first lead terminal 33 is connected to be electrically conductive by the pressure sensor 20 and a wire W (for example, made of aluminum). A wire bonding device is employed for the sake of connection of the wire W.

It is to be noted that impregnation processing which is processing of filling a sealing material in a gap which is produced at the time of insert molding is applied to a contact site between the first resin section 32 and the first lead terminal 33. Similarly, impregnation processing is also applied to a contact site between the ring member 31 and the first resin section 32.

The first lead terminal 33, as shown in Fig. 7, is made of a lead frame 330 which is integrally provided with a plurality of first lead terminals 33 (331, 332, 333) for power supply, output, and grounding, at the time of insert molding by the first resin section 32, and subsequent to the insert molding of the first resin section 32, a coupling portion 330a indicated by the dashed line provided at the lead frame 330 is cut and obtained as each of the first lead terminals 33 (331, 332, 333) individually separated, and the wire W is connected, by wire bonding, to a wire connecting portion 33a which is provided at an end part of each of the first lead terminals 33 (331, 332, 333) that is obtained at the time of the cutting.

At this juncture, in the first resin section 32, an opening portion 320 for disposing the pressure sensor 20 is provided, and at a position of this opening portion 320, the coupling portion 330a to be coupled by the plurality of the first lead terminals 33 (331 332, 333) provided at the lead frame 330 is disposed, whereby subsequent to the insert molding of the first resin section 32, the coupling portion 330a of the lead frame 330 that is positioned in the opening portion 320 can be easily cut, and the plurality of the first lead terminals 33 (331, 332, 333) that is capable of connecting to the pressure sensor 20 can be obtained without complicating manufacturing processes.

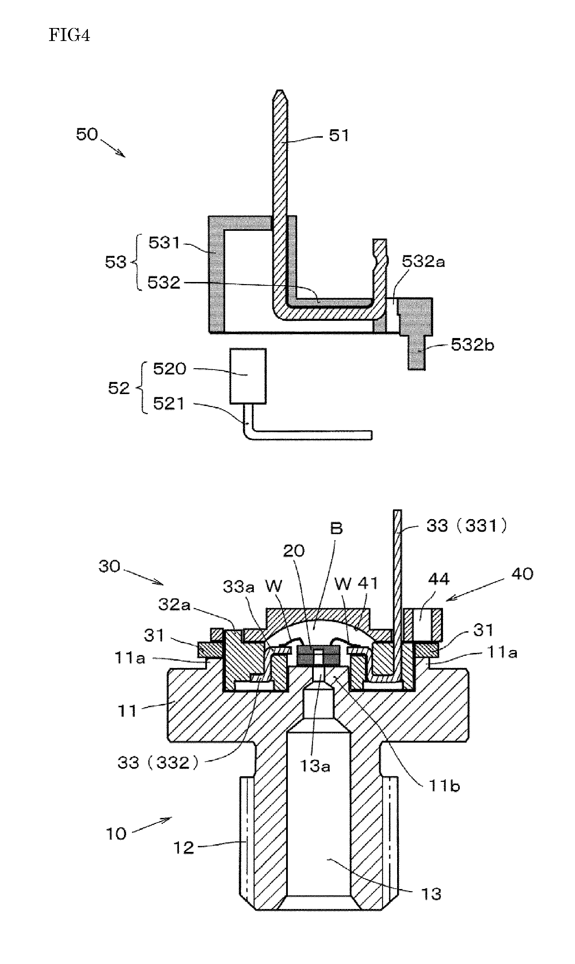

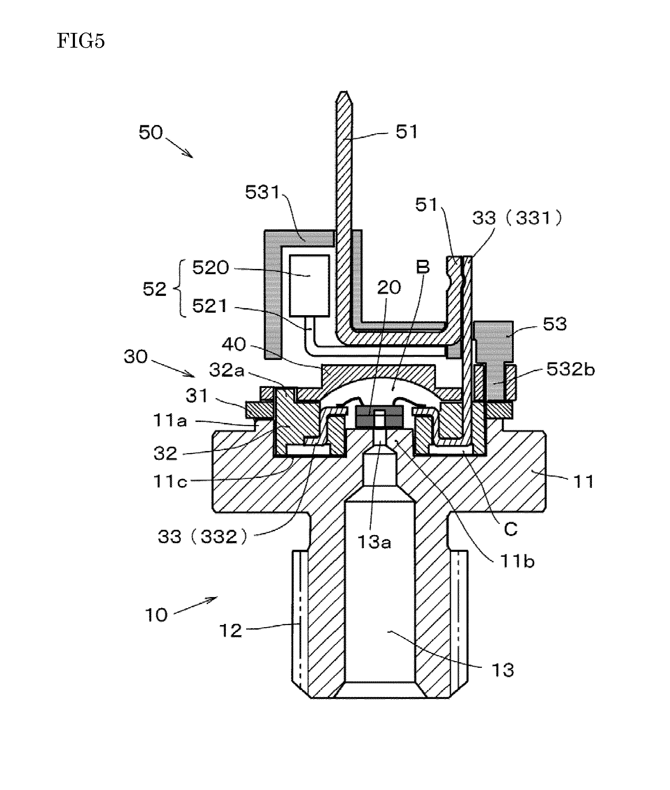

The lid member 40 is a member which is made of a PPS resin, for example, which is coupled to the first resin section 32 of the base plate unit 30 (first unit member) so as to cover the pressure sensor 20 from an upper side, and which forms a closed space in which the pressure sensor 20 is internally positioned. Hereinafter, this closed space is referred to as a pressure reference chamber B (refer to Fig. 1 and Fig. 4 or the like). An interior face of the lid member 40, as shown in Fig. 4 and Fig. 5 or the like, is formed as a concave face 41. The lid member 40 is welded with an upper end face of the first resin section 32 (for example, by laser welding deposition), and by this deposition, the pressure reference chamber B is formed between the lid member 40 and the first resin section 32.

In the lid member 40, there are formed: a pin insertion hole 42 to insert the pin 32a of the first resin section 32; a terminal insertion hole 43 to insert the first lead terminals 33 (331, 332, 333); and a protrusion portion insertion hole 44 to engage with a protrusion portion 532b which a second resin section 53 to be described later has. It is to be noted that Fig. 4 shows a state in which the lid member 40 is placed on the first resin section 32 and a state before both of these sections are welded with each other.

The terminal unit (the second unit member) 50, as shown in the figures, is provided with a second lead terminal 51, a noise absorption capacitor 52, and a second resin section 53.

The second lead terminal 51 is made of a phosphor bronze material, for example, is a sectional substantial L-shape. One end part of the second lead terminal 51 extends to an upper side, and is bonded with the other end part of the first lead terminal 33 (an opposite end part to the pressure sensor 20 side) (for example, by resistance welding). The other end part of the second lead terminal 51 extends to a further upper side than such one end part, and constitutes a connector section 70 which will be described later.

There are three second lead terminals 51, and these terminals respectively correspond to the first lead terminal 331, 332, 333. Namely, the three second lead terminals 51 are respectively assigned as a power line, a signal line, and a ground line.

The noise absorption capacitor 52 is made of a lead type ceramic capacitor, for example, and has a capacitor section 520 and a side face L-shaped lead section 521, as shown in Fig. 1. The capacitor section 520 is arranged at a left side part in Fig. 1 of the second lead terminal 51. The lead section 521 connected to the capacitor section 520 is a lead, a tip end part of which is connected to the lead terminal 51 (for example, by resistance welding). The noise absorption capacitor 52 is for absorbing an external noise weighted on a power line and a signal line, and the same two capacitors are arranged in a direction to penetrate the paper face of Fig. 1, for example.

The second resin section 53 is a member which is made of a PPS resin, for example, and which retains the second lead terminal 51 and covers the noise absorption capacitor 52 from an upper side. The second resin section 53 thus covers the noise absorption capacitor 52 to thereby protect the noise absorption capacitor 52 from an injection molding temperature and a pressure at the time of molding of a resin cover member 60.

The second resin section 53 forms a shape such that an external semi-columnar first portion 531 made of an opened cup shape at a lower side and an external semi-disk shaped second portion 532 are jointed with each other. In the embodiment, the noise absorption capacitor 52 (the capacitor section 520) is essentially protected by the first portion 531 as described above.

The second resin section 53 is integrally molded with the second lead terminal 51 by insert molding to thereby retain the second lead terminal 51. The second lead terminal 51 thus retained is a terminal in which a part thereof (an opposite end part to an end part connected to the first lead terminal 33) penetrates the first portion 531 upward, and constitutes a connector section 70 which will be described later.

Also, an opposite end part to an end part constituting the connector section 70 of the second lead terminal 51 penetrates the second portion 532 upward, and is welded with the first lead terminal 33. It is to be noted that impregnation processing is applied to a contact site between the second resin section 53 and the second lead terminal 51.

In the second portion 532 of the second resin section 53, holes 532a to penetrate the first lead terminal 33 are provided. Namely, there are three holes 532a respectively corresponding to the first lead terminals 331, 332, 333. Also, in the second portion 532, at an end part of an outer circumferential side thereof, a protrusion portion 532b protruding downward is provided, and this protrusion portion 532b is inserted into a protrusion portion insertion hole 44 of the lid member 40 mentioned previously, whereby the terminal unit 50 is temporarily secured to the lid member 40.

The resin cover member 60 is a cover section which is positioned at an upper side of the fluid inflow member 10 made of a PPS resin, for example. Although the resin cover member 60 covers the base plate unit 30 (first unit member), the lid member 40, and the terminal unit 50 (second unit member), this cover section is molded in such a manner that a part of the second lead terminal 51 of the terminal unit 50 is exposed to the outside (namely, a part of the second lead terminal 51 is exposed to the outside, i.e., the outside of the resin cover member 60).

The connector section 70 (a direct coupler section) is constructed with: a portion exposed from the resin cover member 60 to the outside of the second lead terminal 51; and a portion surrounding the exposed second lead terminal 51 of the resin cover member 60. This connector section 70 can be connected to a terminal of a predetermined external device, whereby a power voltage is applied from the connected external device to the pressure sensor 20, and a detection signal of the pressure sensor 20 can be supplied to the connected external device. The external device having thus acquired the detection signal obtains a pressure of a fluid (for example, a hydraulic pressure), based on the acquired detection signal.

The resin cover member 60 is obtained by outsert molding with the fluid inflow member 10. The molded resin cover member 60 couples the fluid inflow member (an upper end part of the fluid inflow member 10) and the base plate unit 30 which is one example of the first unit to each other and the lid member 40 and the terminal unit 50 which is one example of the second unit to each other. In a state in which the respective sections are thus coupled to each other, in particular, the lid member 40 is pressed from an upper side by the resin cover member 60.

Although the lid member 40 is coupled to the first resin section 32 by laser welding deposition as mentioned previously, this lid member is thus further pressed by the resin cover member 60, whereby the lid member is rigidly fixed to the first resin section 32 of the base plate unit 30. Thus, an excessive pressure is produced relative to a fluid (for example, oil) flowing inside from the flow passageway 13, the pressure sensor 20 is broken, and even if the fluid reaches the inside of the pressure reference chamber B, the outflowing of the fluid from an upper part and a side part of the lid member 40 can be precluded.

The pressure detection device 100 according to the embodiment has a failsafe structure which restrains to the utmost the leakage of a fluid of which a pressure is targeted to be detected.

The pressure detection device 100 made of the constituent elements mentioned above is provided with: a fluid inflow member 10 having a flow passageway 13 into which a fluid can be flown by a pressure of the fluid that is input from the flow passageway 13; a pressure sensor 20 which is provided on a top face of the fluid inflow member 10, and detects the pressure of the fluid having flown into the flow passageway 13; a first unit member 30 having: a first resin section 32 which is provided on the top face of the fluid inflow member 10, and surrounds the pressure sensor 20; and a first lead terminal 33 which is retained by the first resin section 32, one end part of which is electrically connected to the pressure sensor 20; a lid member 40 which is coupled to the first resin section 32 so as to cover the pressure sensor 20 from an upper side, and forms a closed space in which the pressure sensor 20 is internally positioned; a second unit member 50 having: a second resin section 53 which covers the lid member 40 from an upper side; and a second lead terminal 51 which is retained by the second resin section 53, and is electrically connected to the other end part of the first lead terminal 33; and a resin cover member 60 which couples the fluid inflow member 10 and the first unit member 30 to each other and the lid member 40 and the second unit member 50 to each other, and covers the first unit member 30, the lid member 40, and the second unit member 50 by resin molding, while a part of the second lead terminal 51 of the second unit member 50 is exposed to the outside, wherein the pressure sensor 20 and the first lead terminal 33 that is retained by the first resin section 32 are connected to each other by a wire W exerted by wire bonding, the first lead terminal 33 and the second lead terminal 51 are bonded with each other by welding, and a bonding portion thereof is covered at the time of molding the resin cover member 60; and therefore, a conventionally indispensable circuit board can be eliminated, thus making it possible to simplify a structure and restrain manufacturing costs, and the first lead terminal 33 and the second lead terminal 51 are bonded with each other by welding, whereby an electrical connection and a mechanical fixing strength can be sufficiently retained, and moreover, a bonding portion thereof is covered at the time of molding the resin cover member 60, whereby air tightness can be ensured.

In addition, the construction of the pressure detection device 100 is obtained as a structure in which assembling is easy, and which is capable of restraining the number of parts and the number of processes. That is, in so far as the pressure detection device according to Patent Literature 1 mentioned previously is concerned, in a connection structure from a pressure sensor to an electrode lead of a connector section, there is a need to perform the complicated steps of:
1) connecting a circuit board which is made electrically conductive to the pressure sensor to each other via a wire and a first lead terminal; and
2) connecting the first lead pin and a penetration capacitor to each other, and connecting the first lead pin and the first lead terminal to each other by soldering,
3) connecting the first lead pin and the penetration capacitor to each other by soldering, and therefore, there has been room for improvement; and however, in so far as the pressure detection device 100 in the embodiment is concerned, from the pressure sensor 20 leading up to the connector section 70, an electrical conducting structure is essentially composed of the first lead terminal 33 that is retained by the base plate unit (the first unit member) 30 and the second lead terminal 51 that is retained by the terminal unit (the second unit member) 50. With this construction, it is sufficient if the base plate unit 30 that is one example of the first unit member provided as a unit and the terminal unit 50 or the like that is one example of the second unit member be assembled with each other, and the connecting portions of the respective terminals be welded with each other.

Thus, with the construction of the pressure detection device 100 according to the embodiment, there is no need to supply soldering and perform temperature control for soldering (or it is possible to restrain the supply and control to the required minimum), an assembling property is improved, and manufacturing costs can be restrained.

Also, with the construction of the pressure detection device 100 according to the embodiment, since there is no need to provide a circuit board as in the pressure detection device according to Patent Literature 1 mentioned previously, an increased number of parts can be restrained.

Hereinafter, one example of a method for producing the pressure detection device 100 will be briefly described.
1) The pressure sensor 20 is arranged at the fluid inflow member 10.
2) The base plate unit 30 (one example of the first unit member) that is integrally molded by insert molding is prepared, and the base plate unit 30 is disposed on the fluid inflow member 10.
   At this juncture, as preliminary processing, subsequent to insert molding of the first resin section 32, the coupling section 330a provided at the lead frame 330 is cut, and the first lead terminal 33 (331, 332, 333) is individually separated.
3) The protrusion portion 11a of the fluid inflow member 10 and the ring member 31 of the base plate unit 30 are bonded with each other by resistance welding. Then, the pressure sensor 20 and the first lead terminal 33 are connected to be electrically conductive to each other by a wire bonding device.
4) The lid member 40 to cover the pressure sensor 20 from an upper side is bonded with the first resin section 32 of the base plate unit 30 by laser welding deposition, and a closed space in which the pressure sensor 20 is internally positioned is formed by the lid member 40.
5) The terminal unit 50 (one example of the second unit member) integrally molded by insert molding is prepared, and is disposed at an upper side of the lid member 40.
   Specifically, the protrusion portion 532b that the second resin section 53 of the terminal unit 50 has is inserted into the protrusion portion insertion hole 44 of the lid member 40, and the terminal unit 50 is temporarily secured to the lid member 40. Then, the first lead terminal 33 and the second lead terminal 51 are connected to each other by resistance welding.
6) Subsequent to disposing the terminal unit 50, the resin cover member 60 is molded by outsert molding.

The pressure detection device 100 is produced as follows, for example. It is to be noted that some of the processes 1) to 6) mentioned above can be replaced in sequential order as required.

### (Modification Example)

It is to be noted that the present invention is not limitative to the foregoing embodiment, and a variety of modifications are possible. Hereinafter, one example of such modifications is shown.

Although the foregoing description showed an example of connecting the noise absorption capacitor 52 made of a lead type ceramic capacitor to the second lead terminal 51, the present invention is not limitative thereto. As a noise absorption capacitor, a chip capacitor may be connected to the second lead terminal 51.

Also, a noise absorption capacitor can be connected to the first lead terminal 33 as well as the second lead terminal 51. In this case, for example, by utilizing a space C (refer to Fig. 1) which is formed between the recessed portion 32b of the first resin section 32 and the recessed portion 11c of the fluid inflow member 10, a chip capacitor to connect with the first lead terminal 33 may be arranged in the space C. In this manner, an external noise can be further reduced.

It is to be noted that the present invention is not limited by the foregoing embodiments and drawings. It is possible to apply alteration(s) (including deletion(s) of the constituent element(s) in the embodiments and drawings as required without deviating from the gist of the present invention.

### INDUSTRIAL APPLICABILITY

Although the foregoing embodiments described a pressure detection device for vehicles or the like as an application example thereof by way of example, the present invention is applicable to special vehicles such as ship construction machines, agricultural machines or construction machines as well as motor vehicles, and is, of course, applicable to a variety of pressure detection devices as well as such vehicles.

### DESCRIPTION OF REFERENCE NUMERALS

- 100: Pressure detection device
- 10: Fluid inflow member
- 11: Barrel section
- 11a: Protrusion portion
- 11b: Base
- 11c: Recessed portion
- 12: Screw section
- 13: Flow passageway
- 13a: Opening portion
- 20: Semiconductor type pressure sensor
- 30: Base plate unit (one example of first unit member)
- 31: Ring member
- 32: First resin section
- 32a: Pin
- 32b: Recessed portion
- 33: First lead terminal
- 33a: Wire connecting portion
- 40: Lid member
- 41: Concave face
- 42: Pin insertion hole
- 43: Terminal insertion hole
- 44: Protrusion portion insertion hole
- 50: Terminal unit (one example of second unit member)
- 51: Second lead terminal
- 52: Noise absorption capacitor
- 53: Second resin section
- 60: Resin cover member
- 70: Connector section
- 320: Opening portion
- 321: Proximal section
- 330: Lead frame
- 330a: Coupling section
- 331, 332, 333: First lead terminals
- 520: Capacitor section
- 521: Lead section
- 531: First portion
- 532: Second portion
- 532a: Hole
- 532b: Protrusion portion
- B: Pressure reference chamber (closed space)
- C: Space
- W: Wire

## Claims

1. A pressure detection device comprising:
a fluid inflow member having a flow passageway into which a fluid can be flown;
a semiconductor type pressure sensor which is provided on a top face of the fluid inflow member, and detects the pressure of the fluid having flown into the flow passageway;
a first unit member having:
a first resin section which is provided on the top face of the fluid inflow member, and surrounds the semiconductor type pressure sensor; and
a first lead terminal which is retained by the first resin section, one end part of which is electrically connected to the semiconductor type pressure sensor;
a lid member which is coupled to the first resin section so as to cover the semiconductor type pressure sensor from an upper side, and forms a closed space in which the semiconductor type pressure sensor is internally positioned;
a second unit member having:
a second resin section which covers the lid member from an upper side; and
a second lead terminal which is retained by the second resin section, and is electrically connected to an other end part of the first lead terminal; and
a resin cover member which couples the fluid inflow member and the first unit member and the lid member and the second unit member, and covers the first unit member, the lid member, and the second unit member by resin molding, while a part of the second lead terminal of the second unit member is exposed to an outside,
wherein the semiconductor type pressure sensor and the first lead terminal that is retained by the first resin section are connected to each other by a wire exerted by wire bonding,
the first lead terminal and the second lead terminal are bonded with each other by welding, and
a bonding portion thereof is covered at a time of molding the resin cover member.

2. The pressure detection device according to claim 1, wherein
the first lead terminal is made of a lead frame integrally including a plurality of lead terminals for power supply, output, and grounding, at a time of insert molding exerted by the first resin section, and
subsequent to insert molding of the first resin section, a coupling section provided at the lead frame is cut and obtained as the first lead terminal individually separated, and the wire is connected to a wire connecting portion which is provided at an end part of the first lead terminal obtained at a time of the cutting.

3. The pressure detection device according to claim 2, comprising, in the first resin section, an opening portion for disposing the semiconductor type pressure sensor,
wherein the lead frame has, in the opening portion, the coupling section to be coupled by a plurality of lead terminals, and
subsequent to insert molding of the first resin section, the coupling section is formed to be cut.

4. The pressure detection device according to any one of claims 1 to 3, wherein plating processing is applied to the first lead terminal.
